# DEMANDE DE BREVET EUROPEEN

(11) **EP 1 837 840 A2**
(43) Date de publication de la demande: **26.09.2007**
(21) Numéro de dépôt: 07005778.1
(22) Date de dépôt: 21.03.2007
(51) Int. Cl.: G08C 17/02, H04L 12/28

(54) **Méthode d'enregistrement et de configuration d'un composant dans un système domotique et appareils utilisés par la méthode**

(30) Priorité: 24.03.2006 FR 0602618
(71) Demandeur: DELTA DORE Société Anonyme, F-35270 Combourg (FR)
(72) Inventeur: Salabert, Marc, 82008 Montauban Cedex (FR)
(74) Mandataire: Maillet, Alain

(57) **Abrégé**

La méthode consiste à utiliser un composant (2.5, 3.1) déplaçable du système, doté d'une interface homme/machine permettant la configuration des autres composants (2.2, 2.3) et pouvant être déplacé par l'opérateur lors de la phase d'enregistrement. Dans un mode de réalisation, ce composant (2.5, 3.1) déplaçable, appelé clavier mobile, peut recevoir les identifiants des autres composants et émettre la liste des composants et leur configuration vers la centrale (2.1, 5.1). Les différents composants sont donc dotés de moyens (4.2) d'émettre leurs identifiants vers ce clavier mobile (2.5, 3.1). La centrale (2.1, 5.1), quant à elle, est dotée de moyens (5.3) de recevoir les différentes configurations émises par ce composant mobile (2.5, 3.1).

Ce clavier mobile (2.5, 3.1) permet donc à l'opérateur d'effectuer la configuration et notamment le nommage de chaque composant (2.2, 2.3) lors de son enregistrement, sans devoir revenir à la centrale (2.1, 5.1) et sans devoir noter l'identifiant. Ces configurations sont ensuite transmises à la centrale (2.5, 5.1) par le clavier mobile (2.5, 3.1).

## Description

### Domaine technique

L'invention se situe dans le domaine des réseaux domotiques comme par exemple les systèmes d'alarme. Elle concerne plus particulièrement la phase de configuration du système et notamment l'enregistrement et la configuration des composants du système.

### Art antérieur

Les réseaux domotiques comme les systèmes d'alarme comprennent généralement un organe central chargé du contrôle du système appelé centrale, et différents composants connectés à cette centrale. Ces différents composants comprennent divers types de détecteurs comme, par exemple, des détecteurs d'intrusion, des détecteurs de présence, des détecteurs d'incendie, divers types de composants d'alarmes comme des sirènes, des projecteurs ou autres. Le système peut également comprendre des composants de type domotique, comme des organes de commande de lumières, des commandes de volets ou autres.

La connexion entre les divers composants du système et la centrale peut prendre différentes formes. Il peut s'agir d'une connexion filaire de type bus reliant les composants et la centrale. La connexion peut encore se faire par radio ou par tout type de réseau, comme par exemple les réseaux de type informatique tels que Ethernet, WiFi ou autres.

Pour des raisons de sécurité, il est indispensable que seuls les composants du système puissent communiquer avec la centrale. II faut notamment prévenir toute possibilité de connexion d'un appareil tiers, potentiellement contrôlé par une personne malveillante, qui serait susceptible de perturber le fonctionnement du système. À cette fin, la plupart des systèmes prévoient une procédure d'enregistrement des composants du système lors de son installation. Ensuite, lors du fonctionnement du système, seuls les composants enregistrés pourront communiquer avec la centrale.

Cette phase d'enregistrement est généralement basée sur la communication à la centrale, par le composant, d'un identifiant unique de ce composant. Cet identifiant est ensuite utilisé lors des phases de communication pour permettre à la centrale d'identifier l'origine d'un message reçu. Pour garantir un niveau acceptable d'unicité de ces identifiants, ceux-ci sont généralement composés de nombres binaires codés sur un grand nombre de bits ; ils sont, par conséquent, d'une manipulation malaisée pour un être humain. Leur mémorisation est difficile et l'action de les noter manuellement sujette à erreur. Pour être en mesure de gérer le système, la centrale doit, en outre, connaître le type et la fonction de chaque composant du système. La centrale, connaissant les différents composants du système, leur type et leur fonction, peut alors gérer une politique d'alarme consistant à déclencher les composants d'alarme ad hoc selon les événements détectés. La phase d'enregistrement consiste donc à transmettre à la centrale des données intrinsèques au composant, certaines de ces données, comme l'identifiant unique, étant caractéristiques du composant. On qualifie ici d'intrinsèques les données qui ne dépendent que du composant et pas du système dans lequel il s'insère.

Les centrales sont également généralement dotées de moyens de communication avec des utilisateurs humains. Il peut s'agir de simples messages affichés sur un écran par la centrale, ou encore de l'envoi de messages via un réseau de télécommunication, comme par exemple l'envoi de messages textes sur des téléphones mobiles. Pour l'intelligibilité de ces communications, il est souhaitable que chaque composant du système soit nommé, par exemple, en fonction de sa localisation. De cette façon, la centrale est à même de générer des messages intelligiblcs dans lesquels elle nomme les composants par un nom qui sera facilement compris par un être humain. Chaque composant doit donc, non seulement être identifié de manière unique par la centrale à l'aide de son identifiant, mais aussi doté d'un nom intelligible lors de la phase de configuration du système. La centrale doit donc associer à chaque composant, non seulement des données intrinsèques relatives à ce composant, mais également des données supplémentaires également relatives à ce composant mais dépendant, par exemple, du système, comme son nom ou encore les données de localisation du composant dans le système.

Pour des raisons de coût et de fiabilité, les composants d'un système domotique sont généralement très simples et n'intègrent pas de moyens sophistiqués d'interface homme/machine permettant leur configuration et notamment leur nommage. Cette configuration est généralement faite depuis la centrale, qui possède, elle, généralement un clavier et un écran.

Typiquement, la phase d'enregistrement des composants du système consiste à mettre la centrale dans un mode d'enregistrement. Ceci fait, on doit, pour chaque composant, déclencher une opération d'enregistrement. Celle-ci se fait, par exemple, en appuyant sur un bouton ad hoc du composant qui déclenche l'envoi par celui-ci de ses données intrinsèques, comme son identifiant unique et/ou un code de type, vers la centrale. La centrale enregistre alors le composant et ses données intrinsèques. À ce stade, la centrale ne connaît donc du composant que ses données intrinsèques, mais ne connaît rien quant à sa localisation et ne possède pas de nom associé.

Dans un second temps, l'opérateur doit donc effectuer la configuration du composant au niveau de la centrale. Cette configuration consiste à associer à ce composant des données qui ne dépendent pas intrinsèquement du composant, mais du système. Cette configuration peut intervenir après chaque enregistrement de composant. Dans ce cas, l'opérateur doit effectuer des va-et-vient entre la centrale et les composants. Il enregistre un composant, revient à la centrale pour le configurer, repart ensuite enregistrer le composant suivant et ainsi de suite. Une alternative consiste à enregistrer tous les composants, à noter leurs identifiants, puis à revenir à la centrale pour configurer tous les composants ainsi enregistrés. Comme nous l'avons vu plus haut, du fait de leur nature de grand nombre, cette opération de recopie manuelle des identifiants est fastidieuse et sujette à erreur. De plus, il faut encore noter les endroits où ont été installés les différents composants et leur nature pour être en mesure de les configurer correctement ensuite.

L'invention a pour but de proposer une méthode d'enregistrement et de configuration, ainsi que les moyens nécessaires à cette méthode, qui permette un enregistrement et la configuration des composants en évitant des va-et-vient entre les composants et la centrale, ainsi que l'obligation de noter les identifiants des divers composants.

### Exposé de l'invention

La méthode consiste à utiliser un composant déplaçable du système, doté d'une interface homme/machine permettant la configuration des autres composants et pouvant être déplacé par l'opérateur lors de la phase d'enregistrement. Dans un mode de réalisation, ce composant déplaçable, appelé clavier mobile, peut recevoir les identifiants des autres composants et émettre la liste des composants et leurs configurations vers la centrale. Les différents composants sont donc dotés de moyens d'émettre leurs identifiants vers ce clavier mobile. La centrale, quant à elle, est dotée de moyens de recevoir les différentes configurations émises par ce composant mobile.

Ce clavier mobile permet donc à l'opérateur d'effectuer la configuration, et notamment le nommage de chaque composant lors de son enregistrement, sans devoir revenir à la centrale et sans devoir noter l'identifiant. Ces configurations sont ensuite transmises à la centrale par le clavier mobile.

L'invention concerne un procédé d'enregistrement et de configuration d'au moins un composant au sein d'un système domotique contrôlé par un organe de contrôle central appelé centrale, qui comporte une étape d'enregistrement dudit composant auprès de la centrale, consistant en l'envoi de données intrinsèques au composant à la centrale ; une étape de configuration dudit composant consistant à associer des données supplémentaires relatives au composant auprès de la centrale ; et où l'étape de configuration est effectuée à l'aide d'un composant déplaçable du système appelé clavier mobile.

Selon un mode de réalisation de l'invention, la phase d'enregistrement comprend l'envoi par le composant à la centrale de données intrinsèques caractéristiques du composant, par exemple un identifiant unique du composant au sein du système.

Selon un mode de réalisation de l'invention, le procédé comporte, en outre, une étape de transmission entre le composant et le clavier mobile desdites données intrinsèques caractéristiques du composant, pour permettre d'associer les données supplémentaires de configuration relatives au composant et ses données intrinsèques caractéristiques.

Selon un mode de réalisation de l'invention, le procédé comporte, en outre, une étape de transmission des données de configuration du composant entre le clavier mobile et la centrale.

Selon un mode de réalisation de l'invention, le procédé comporte, en outre, une étape de transmission des données intrinsèques caractéristique du composant entre le clavier mobile et la centrale.

L'invention concerne également un composant d'un système domotique contrôlé par un organe de contrôle central appelé centrale qui comporte des données intrinsèques aux composants caractéristiques de ce composant ; des moyens de communication avec ladite centrale ; des moyens d'émettre des données intrinsèques au composant à destination de la centrale à la demande d'un opérateur ; et des moyens de transmission desdites données intrinsèques caractéristiques à destination d'un composant déplaçable du système.

L'invention concerne également un composant d'un système domotique contrôlé par un organe de contrôle central appelé centrale déplaçable et comportant des moyens d'entrer des données de configuration relatives à un autre composant du système, et des moyens de transmettre à la centrale ces données de configuration ;

Selon un mode de réalisation de l'invention, le composant comporte, en outre, des moyens de réception par un autre composant du système de données intrinsèques caractéristiques de ce composant.

Selon un mode de réalisation de l'invention, les moyens de transmettre à la centrale les données de configuration relative à un autre composant du système sont adaptés pour transmettre en outre les données intrinsèques caractéristiques de cet autre composant du système.

L'invention concerne également un organe de contrôle central au sein d'un système domotique qui comporte des moyens de mémoriser, pour chaque composant du système, des données intrinsèques au composant et des données supplémentaires relatives à ce composant ; des moyens de communication avec les autres composants du système lui permettant de recevoir les données intrinsèques des autres composants ; et des moyens de réception des données supplémentaires relatives à un composant, transmises par un composant déplaçable du système.

Selon un mode de réalisation de l'invention, les données intrinsèques aux composants comprenant des données caractéristiques du composant au sein du système, les moyens de réception des données supplémentaires relatives à un composant sont adaptés pour recevoir également ces données intrinsèques caractéristiques de ce composant.

### Brève description des dessins

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est un organigramme du procédé utilisé dans l'exemple de réalisation de l'invention,
la Fig. 2 est un schéma du système composé par l'exemple de réalisation de l'invention,
la Fig. 3 est un schéma du clavier mobile de l'exemple de réalisation de l'invention,
la Fig. 4 est un schéma d'un composant du système selon l'exemple de réalisation de l'invention,
la Fig. 5 est un schéma de la centrale selon l'exemple de réalisation de l'invcntion.

### Exposé détaillé de l'invention

Lors de l'installation d'un système domotique comme un système d'alarme, une première phase consiste en l'installation physique des différents composants. On installe donc la centrale et les différents détecteurs, ainsi que les composants d'alarme. On ajoute éventuellement les différents composants de commande domotique.

Cette phase d'installation faite, il s'ensuit une phase d'enregistrement. Nous appelons phase d'enregistrement, la phase consistant à identifier chaque composant auprès de la centrale, de manière à pouvoir, ensuite, lors du fonctionnement du système, identifier chaque communication. Lors de cette phase d'enregistrement le composant va communiquer à la centrale un ensemble de données intrinsèques à ce composant. Chaque composant peut, de plus, nécessiter une phase de configuration consistant à ajouter aux données intrinsèques relatives au composant, des données supplémentaires dépendant, par exemple, du système. Pendant cette phase, on réglera, par exemple, la sensibilité d'un détecteur, la puissance d'une sirène, d'éventuels délais de déclenchement ou autre. Cette phase de configuration peut également comporter une phase de nommage permettant d'attribuer un nom intelligible à chaque composant comme par exemple « détecteur infrarouge cuisine », « détecteur de présence jardin » ou encore « sirène entrée ».

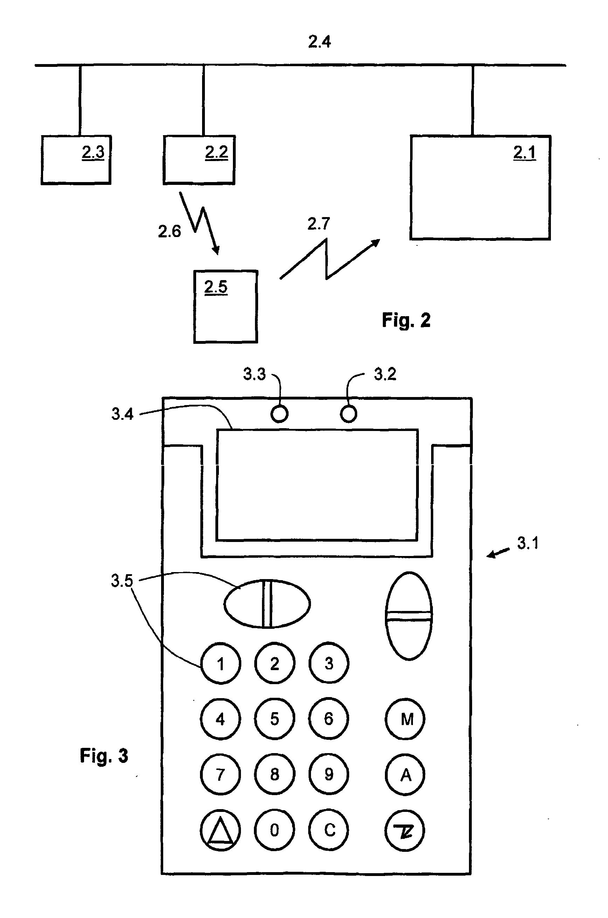

Selon un mode de réalisation de l'invention illustré Fig. 2, le système est contrôlé par un organe centralisé de contrôle nommé centrale et référencé 2.1. Cette centrale va comprendre la logique nécessaire au contrôle du système. Elle est généralement située dans un endroit protégé du bâtiment hébergeant l'installation. Le système comporte également des composants référencés 2.2 et 2.3, qui peuvent consister en des détecteurs de présence, d'intrusion, d'incendie ou autre. Ils peuvent également consister en des composants d'alarme tels que des sirènes, des projecteurs, ou encore des composants domotiques permettant l'automatisation de fonctions d'éclairage ou d'éléments du bâtiment, comme des portes, des volets ou autres. Ces différents composants peuvent communiquer avec la centrale. Cette communication peut prendre diverses formes, comme le bus de communication référencé 2.4. Il est également courant que cette communication se fasse au moyen d'émetteurs récepteurs radios à l'aide de protocoles sécurisés. De fait, tout moyen de communication peut ici être utilisé, comme par exemple des réseaux de type informatique tels que Ethernet ou sans fils comme le WiFi (famille de protocoles 802.11 de l'ETSI). Ces moyens de communication permettent, lors du fonctionnement du système, d'une part, aux composants comme les détecteurs, de signaler à la centrale l'occurrence d'un événement comme l'intrusion d'un individu, un début d'incendie ou autre, et, d'autre part, à la centrale de contrôler les composants. La centrale pourra dans ce cas déclencher des composants d'alarme en fonction de sa programmation, comme une sirène ou encore un projecteur. La plupart des systèmes actuels sont, de plus, dotés d'interfaces vers des systèmes de télécommunication comme le réseau téléphonique classique ou encore le réseau de téléphonie mobile et sont à même de signaler l'occurrence d'un événement au propriétaire des lieux ou aux autorités compétentes comme la police ou les pompiers. Selon le mode de réalisation de l'invention, le système est également doté d'un composant mobile particulier référencé 2.5 et appelé clavier mobile. Ce clavier mobile pourra être connecté au système, de manière similaire aux autres composants, par exemple lorsqu'il est rangé sur sa base, mais il est également possible de le déplacer. Lors de ces déplacements, ce clavier mobile pourra, au moins sommairement, communiquer avec les autres composants du système et également avec la centrale. Ces communications sont référencées 2.6 et 2.7 sur la Fig. 2. Lors de ces déplacements, le clavier mobile pourra être alimenté par une pile ou un accumulateur présent dans l'appareil ou qu'on y place à cette occasion.

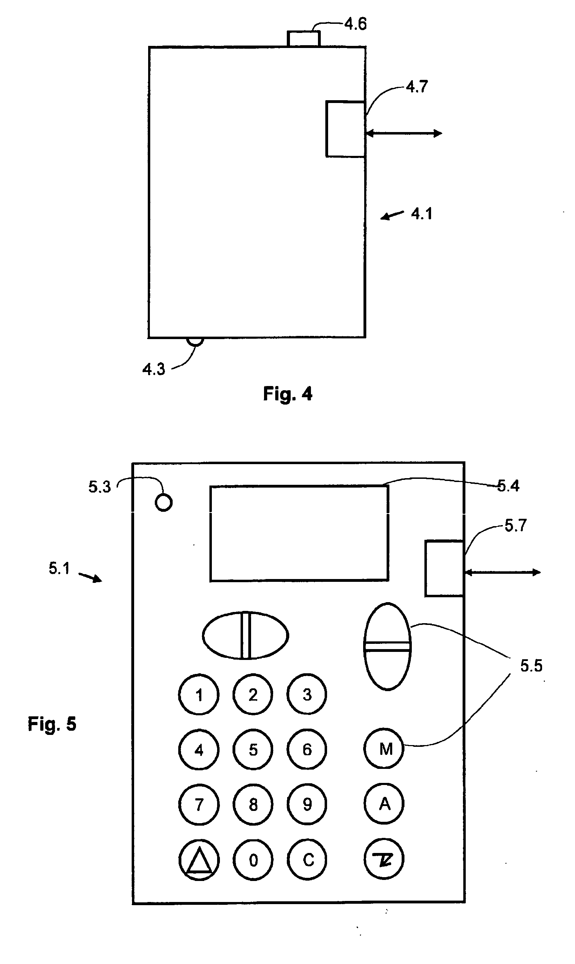

Le clavier mobile, référencé 3.1, de l'exemple de réalisation est illustré Fig. 3. Ce clavier est déplaçable dans le sens qu'il peut être emporté pour être utilisé en différents endroits du système. Ce clavier comporte un ensemble de touches, référencé 3.5, un écran de visualisation, référencé 3.4. Pour les communications avec les composants et avec la centrale il dispose d'une diode électroluminescente, référencée 3.2, et d'un récepteur photosensible, référencé 3.3. Dans l'exemple de réalisation de l'invention, la diode émet dans la couleur rouge, mais toute autre couleur peut être envisagée comme par exemple l'infrarouge. Les communications ont donc lieu par modulation lumineuse de la diode électroluminescente, cette modulation étant captée par le récepteur photosensible. Il va de soi que tout autre moyen de communication entre le clavier mobile et les autres composants et avec la centrale, peut être envisagé pour réaliser l'invention. Ces moyens peuvent comprendre des communications radios ou encore une interface série directe filaire entre le composant ou la centrale et le clavier mobile. Dans ce cas, il est nécessaire de prévoir un câble que l'opérateur doit brancher préalablement à chaque communication entre le clavier mobile, et d'autre part, le composant ou la centrale avec lequel il veut communiquer. Il est également envisageable que le clavier mobile puisse être directement connecté au composant et/ou à la centrale pour communiquer. L'utilisation d'une communication optique modulée via une diode de couleur visible offre l'avantage de la simplicité, du faible coût et de pouvoir utiliser la diode pour des retours visuels d'information en dehors des communications. Selon l'exemple de réalisation, le clavier mobile coopère avec un socle, non représenté, par exemple fixé à un mur. Lorsque le composant est fixé sur son socle, il est relié au système et peut donc communiquer avec la centrale par le bus de communication 2.4. En dehors de son utilisation lors de la phase de configuration ce clavier mobile peut servir d'interface avec le système et permettre son activation, sa désactivation, de visualiser l'état du système ou encore d'en modifier la programmation.

La Fig.4 illustre un composant quelconque du système de l'exemple de réalisation, ainsi que des organes de ce composant impliqués dans l'invention. Ce composant est doté d'une interface, référencée 4.7, avec le système. Il s'agit en l'occurrence d'une interface avec le bus de communication 2.4. Par cette interface, le composant peut communiquer avec la centrale. Le composant est, en outre, doté d'un bouton, référencé 4.6, qui permet de déclencher la phase d'enregistrement de ce composant. Un appui sur ce bouton déclenche donc l'envoi d'un message par le composant à destination de la centrale. Ce message va typiquement contenir l'identifiant du composant ainsi que son type. Nous rappelons ici que cet identifiant est unique au sein du système. Cette unicité est garantie par l'utilisation d'identifiants codés sur un grand nombre de bits. Le choix de cet identifiant est fait lors de la fabrication du composant. Il va de soi que ce message peut éventuellement, selon le composant et le système, contenir d'autres données sans sortir du cadre de l'invention. Le composant 4.1 est également doté d'une diode électroluminescente, référencée 4.2, qui lui permet, d'une part, d'envoyer un signal lumineux lors de son fonctionnement, et également de communiquer avec le composant mobile. Il est, en particulier, prévu que, suite à l'appui sur le bouton 4.6 déclenchant l'opération d'enregistrement, celle-ci s'étant effectuée avec succès, le composant émette son identifiant via la diode 4.2. Pour ce faire, cet identifiant sera modulé par la diode 4.3 et pourra être lu par le capteur photosensible 3.3 du clavier mobile. On peut également prévoir que cette émission soit répétée plusieurs fois, par exemple, jusqu'à ce que l'opérateur appuie de nouveau sur le bouton 4.6 pour signifier que la lecture de l'identifiant s'est bien déroulée. L'homme du métier comprendra que l'implémentation de cette communication de l'identifiant entre le composant et le clavier mobile n'est qu'un exemple de réalisation de l'invention et qu'elle peut prendre d'autres formes comme une communication par radio ou interface série.

La Fig. 5 montre une centrale, référencée 5.1, telle que celle utilisée dans l'exemple de réalisation de l'invention. Celle-ci dispose d'une interface, référencée, 5.7, avec le bus de communication. C'est par cette interface que la centrale peut interagir avec les divers composants du système. Cette centrale 5.1 dispose également d'un clavier comportant des touches, référencées 5.5, qui permettent la configuration du système directement sur la centrale. Elle dispose d'un écran référencé 5.4 pour les interactions avec l'utilisateur. Dans l'exemple de réalisation, elle dispose également d'un récepteur photosensible, référencé 5.3, qui lui permet de recevoir des messages modulés par une diode électroluminescente. C'est par ce biais que la centrale pourra recevoir, dans l'exemple de réalisation, les configurations émises par le clavier mobile.

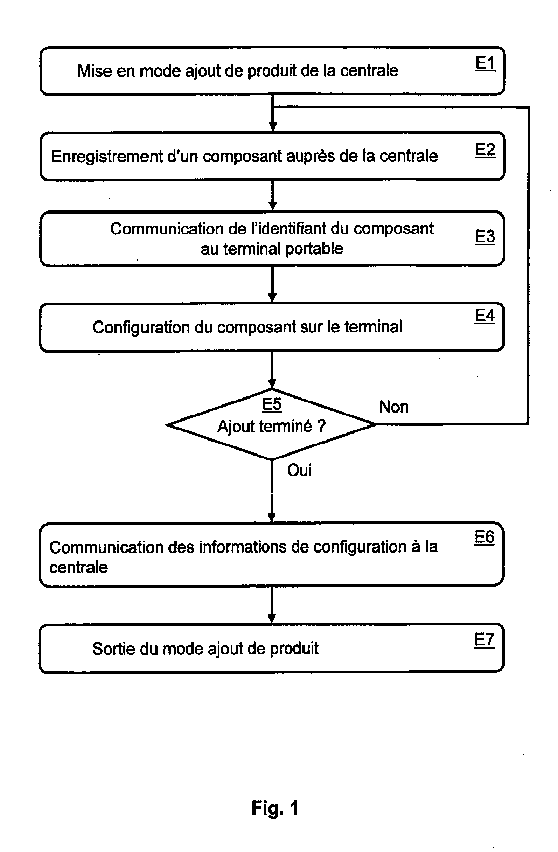

Dans un tel système et selon l'exemple de réalisation de l'invention, la procédure d'enregistrement se déroule comme indiqué Fig. 1. Lors d'une première étape, référencée E1, la centrale est placée dans un mode d'enregistrement des composants du système. Cette opération se déroule directement sur la centrale et est protégée par un code d'administration. L'opérateur prend alors le clavier mobile 3.1 et se rend avec celui-ci auprès du premier composant à enregistrer. Arrivé près de ce composant, il déclenche l'opération d'enregistrement lors d'une étape référencée E2. Ceci se fait par l'appui sur la touche 4.6 de ce composant. Le composant émet alors vers la centrale via le bus de communication 2.4 un message comportant des données intrinsèques au composant, certaines étant caractéristiques de ce composant, comme, par exemple, son identifiant unique dans le système. Généralement, ce message comprendra également le type du composant. La centrale enregistre alors ce composant comme faisant partie du système, elle mémorise son identifiant et son type. Elle envoie alors un acquittement au composant. Sur réception de cet acquittement, le composant peut éventuellement signaler à l'opérateur le succès de cet enregistrement par l'émission d'un signal sonore ou par le clignotement de la diode 4.2. Ensuite, le composant commence à émettre via la diode 4.2 son identifiant. L'opérateur approche alors le clavier mobile du composant pour permettre la lecture de cet identifiant par le clavier. Lorsque cette lecture a eu lieu, il le signale éventuellement au composant en appuyant de nouveau sur la touche 4.6. Cette étape de transmission de l'identifiant est illustrée par l'étape E3 de la Fig. 1. L'opérateur est alors à même de configurer le composant en question à l'aide du clavier. L'opération de configuration consiste essentiellement à ajouter des données supplémentaires relatives au composant, mais dépendantes du système, pour les associer à l'identifiant au sein de la centrale. Il va notamment lui attribuer un nom intelligible, par exemple significatif de sa localisation, et éventuellement un numéro lorsque plusieurs composants du même type sont présents dans le même lieu. Cette opération peut se faire par sélection de la localisation dans une liste prédéfinie ou encore en tapant le nom désiré. Cette configuration est alors mémorisée par le clavier mobile. C'est l'étape E4 de la Fig. 1. Les étapes E2, E3 et E4 sont répétées pour chaque composant à enregistrer. Lorsque tous les composants ont été enregistrés, l'opérateur revient vers la centrale. Il approche le clavier mobile de la centrale et déclenche l'émission par ce clavier au moyen de sa diode électroluminescente 3.2 des configurations enregistrées. La centrale lit ces configurations à l'aide de son récepteur photosensible 5.3 lors de l'étape E6. Une fois que toutes les configurations ont été lues et prises en compte par la centrale, on sort du mode d'enregistrement lors de l'étape E7.

Dans une variante de réalisation de l'invention, le clavier mobile disposant, par exemple, de moyens de communication par radio avec la centrale, chaque configuration est communiquée à la centrale après avoir été entrée par l'opérateur, et avant la phase d'enregistrement du composant suivant. Dans ce cas, il devient optionnel que le composant transmette une partie de ses informations intrinsèques comme son identifiant au clavier mobile car la centrale peut associer directement les informations de configuration reçues du clavier mobile au dernier composant enregistré. Dans une autre variante de réalisation de l'invention, la communication des configurations mémorisées sur le clavier mobile s'effectue via le bus de communication 2.4 lorsque le clavier est reposé sur sa base.

L'utilisation d'un tel clavier mobile permet donc à l'opérateur d'effectuer la configuration des composants lors de la phase d'enregistrement de ceux-ci auprès de la centrale, sans nécessiter ni un retour à la centrale ni de noter ou de mémoriser des identifiants de ces composants.

## Revendications

1. Procédé d'enregistrement et de configuration d'au moins un composant (2.2, 2.3) au sein d'un système domotique contrôlé par un organe de contrôle central (2.1) appelé centrale, comportant les étapes suivantes :
- une étape (1;2) d'enregistrement dudit composant auprès de la centrale consistant en l'envoi de données intrinsèques au composant à la centrale ;
- une étape (E4) de configuration dudit composant consistant à associer des données supplémentaires relatives au composant auprès de la centrale ;
**caractérisé en ce que** :
- l'étape de configuration est effectuée à l'aide d'un composant (2.5, 3.1) pouvant être emporté pour être utilisé en différents endroits du système appelé clavier mobile.

2. Procédé selon la revendication 1 comportant, en outre, une étape (E3) de transmission entre le composant et le clavier mobile desdites données intrinsèques caractéristiques du composant pour permettre d'associer les données supplémentaires de configuration relatives au composant et ces données intrinsèques caractéristiques.

3. Procédé selon la revendication 2 comportant, en outre, une étape (E6) de transmission des données de configuration du composant entre le clavier mobile et la centrale.

4. Procédé selon la revendication 3 comportant en outre une étape de transmission des données intrinsèques caractéristiques du composant entre le clavier mobile et la centrale.

5. Composant (2.5) d'un système domotique contrôlé par un organe de contrôle (2.1) central appelé centrale, comportant :
- des données intrinsèques au composant caractéristiques de ce composant ;
- des moyens de communication (4.7) avec ladite centrale ;
- des moyens (4.6, 4.7) d'émettre des données intrinsèques au composant à destination de la centrale, à la demande d'un opérateur ;
**caractérisé en ce qu'**il comporte, en outre :
- des moyens (4.2) de transmission desdites données intrinsèques caractéristiques à destination d'un composant pouvant être emporté pour être utilisé en différents endroits du système.

6. Composant (3.1, 2.5) d'un système domotique contrôlé par un organe de contrôle central appelé centrale, **caractérisé en ce qu'**il peut être emporté pour être utilisé en différents endroits et qu'il comporte :
- des moyens (3.5) d'entrer des données de configuration relatives à un autre composant du système ;
- des moyens (3.2) de transmettre à la centrale ces données de configuration ;

7. Composant selon la revendication 6 comportant en outre des moyens (3.3) de réception par un autre composant du système de données intrinsèques caractéristiques de composant.

8. Composant selon la revendication 7 où les moyens de transmettre à la centrale les données de configuration relative à un autre composant du système sont adaptés pour transmettre en outre les données intrinsèques caractéristiques de cet autre composant du système.

9. Organe de contrôle central au sein d'un système domotique comportant :
- des moyens de mémoriser, pour chaque composant du système, des données intrinsèques au composant et des données supplémentaires relatives à ce composant ;
- des moyens de communication avec les autres composants du système lui permettant de recevoir les données intrinsèques d'autres composants ;
**caractérisé en ce qu'**il comporte en outre :
- des moyens (5.3) de réception des données supplémentaires relative à un composant transmises par un composant pouvant être emporté pour être utilisé en différents endroits du système.

10. Organe de contrôle selon la revendication 9 où les données intrinsèques aux composants comprenant des données caractéristiques du composant au sein du système, les moyens de réception des données supplémentaires relatives à un composant, sont adaptées pour recevoir également ces données intrinsèques caractéristiques de ce composant.
